# EUROPÄISCHE PATENTSCHRIFT

(11) **EP 3 094 446 B1**
(45) Veröffentlichungstag und Bekanntmachung des Hinweises auf die Patenterteilung: **14.03.2018**
(21) Anmeldenummer: 15702130.4
(22) Anmeldetag: 16.01.2015
(51) Int. Cl.: B23P 19/04, B62D 65/08, B60J 10/00

(54) **VERFAHREN UND VORRICHTUNG ZUM APPLIZIEREN EINER DICHTUNG**
METHOD AND DEVICE FOR APPLYING A SEAL
PROCÉDÉ ET DISPOSITIF D'APPLICATION D'UN JOINT D'ÉTANCHÉITÉ

(30) Priorität: 17.01.2014 DE 102014200825
(43) Veröffentlichungstag der Anmeldung: 23.11.2016
(73) Patentinhaber: ThyssenKrupp System Engineering GmbH, 74076 Heilbronn (DE); thyssenkrupp AG, 45143 Essen (DE)
(72) Erfinder: SIEBENBORN, Christoph, 66679 Losheim am See (DE); PAULUS, Bernd, 66620 Nonnweiler (DE)
(74) Vertreter: thyssenkrupp Intellectual Property GmbH
(86) Internationale Anmeldenummer: PCT/EP2015/000072
(87) Internationale Veröffentlichungsnummer: WO 2015/106968

(56) Entgegenhaltungen:
- EP-A1- 1 902 813
- DE-A1- 10 119 440
- JP-A- H07 237 050
- JP-A- H07 246 525

## Beschreibung

### Stand der Technik

Die vorliegende Erfindung geht aus von einem Verfahren bzw. von einer Vorrichtung zum Applizieren einer Dichtung gemäß dem Oberbegriff des Anspruchs 1 bzw. des Anspruchs 7. Ein solches Verfahren bzw. eine solche Vorrichtung sind aus der JP H 07 246 252 A bekannt. Solche Verfahren sind beispielsweise zum Aufbringen von Dichtungen auf Fahrzeugkarosserieteile, insbesondere im Bereich von Autofenstern, Autotüren, Heckklappen und Schiebedächern, bekannt. Hierbei wird typischerweise ein Applikationskopf entlang des Fahrzeugkarosserieteils bewegt und dabei eine selbstklebende Dichtung in Form eines Endlosbandes von dem Applikationskopf bereitgestellt und auf das Fahrzeugkarosserieteil aufgedrückt. Das Endlosband wird dabei mittels angetriebener Förderrollen von einem Bandspender abgewickelt und dem Applikationskopf kontinuierlich zugeführt. Auch sind Anwendungen bekannt, bei denen eine Dichtung in eine zur Aufnahme der Dichtung vorgesehene Aufnahmenut eines Gehäuseteils oder eines Gehäusedeckels maschinell appliziert wird, wie dies in der JP H 07 246 252 A gezeigt ist.
Bei den aus dem Stand der Technik bekannten Verfahren zum Auftragen von Dichtungen wird die Fördergeschwindigkeit der Förderrollen üblicherweise mit der Vorschubgeschwindigkeit des Applikationskopfes relativ zum Fahrzeugkarosserieteil synchronisiert, damit ein gleichmäßiges Auftragen der Dichtung erzielt wird.
Nachteilig hieran ist, dass variierende Parameter der Dichtung selbst unberücksichtigt bleiben. Bei verschiedenen Produktionschargen können sich die Eigenschaften der Dichtungen, wie beispielsweise Härte, Reibwert oder Form, stark unterscheiden, wodurch sich das Fördervolumen infolge verschiedener Schlupfverhalten verändert. Es wird dann entweder zu wenig oder zu viel Dichtung transportiert, wodurch es beim Applikationsprozess zu Spannungen in der Dichtung oder zu einem Dichtungsstau kommen kann.

### Offenbarung der Erfindung

Es ist eine Aufgabe der vorliegenden Erfindung ein Verfahren und eine Vorrichtung zum Applizieren einer Dichtung bereitzustellen, welche(s) stets ein stau- und spannungsfreies Aufbringen der Dichtung auf ein Werkstück, insbesondere auch bei sich verändernden Dichtungsparametern gewährleistet. Zudem sollen das Verfahren und die Vorrichtung einfach, zuverlässig, schnell und kostengünstig realisierbar sein.

Gelöst wird diese Aufgabe mit einem Verfahren zum Applizieren einer Dichtung auf ein Werkstück, insbesondere auf ein Fahrzeugkarosserieteil, mit den Merkmalen des Anspruchs 1. Die erfindungsgemäße Vorrichtung hat gegenüber dem Stand der Technik den Vorteil, dass beim Applizieren stets der Dichtungspuffer in Form der vorgeschalteten, spannungsfreien Schlaufe im Zuführstrang der Dichtung vorgehalten wird, so dass bei wechselnden Parametern ein Ausgleich stattfinden kann. Der Ausgleich erfolgt automatisch über eine Größenveränderung der Schlaufe und setzt damit keine aufwändige aktive Steuerung im Fördermechanismus der Dichtung voraus. Vorteilhafterweise kann das erfindungsgemäße Verfahren daher vergleichsweise kostengünstig und einfach implementiert werden. Durch die freie Schlaufe im Zuführstrang wird immer nur so viel Dichtung nachgezogen, wie auch benötigt wird, so dass stets ein spannungsfreies Verkleben der Dichtung am Werkstück erreicht wird. Der Ausgleichsmechanismus über die Schlaufe verhindert insbesondere, dass beim Applizieren der Dichtung durch zu schnelles Fördern der Dichtung in Relation zur Relativbewegung zwischen dem Applikationskopf und dem Werkstück ein Materialstau in der Dichtung auftritt oder dass durch zu langsames Fördern der Dichtung in Relation zur Relativbewegung Spannungen in der Dichtung hervorgerufen werden. Wenn ein Materialstau droht, wird sich die Größe der Schlaufe vorher vergrößern und somit das überschüssige Dichtungsmaterial zwischenspeichern bzw. puffern, damit der Materialstau keine Auswirkungen auf den eigentlichen Applikationsvorgang der Dichtung hat. Analog wird sich die Größe der Schlaufe verringern, wenn Zugbelastungen im Dichtungsmaterial auftreten, so dass keine Spannungen in der Dichtung beim eigentlichen Applikationsvorgang auftreten. Die Dichtung umfasst insbesondere eine kontinuierlich applizierte Endlosdichtung. Vorzugsweise ist die Dichtung selbstklebend ausgebildet. Alternativ wäre auch denkbar, dass kurz vor dem Aufbringen der Dichtung die Dichtung und/oder das Werkstück mit einer Klebeschicht versehen wird. Das Werkstück umfasst insbesondere ein Fahrzeugkarosserieteil, beispielsweise für eine Fahrzeugtür, ein Fenster, ein Schiebedach, eine Heckklappe oder dergleichen. Denkbar ist auch ein Fahrzeugkarosseriebauteil mit einem Ausschnitt. Der Applikationskopf wird vorzugsweise entlang des Werkstücks, beispielsweise entlang des Werkstückrands, bewegt. Grundsätzlich wäre aber denkbar, dass das Werkstück relativ zum Applikationskopf bewegt wird. Der Wortlaut "freie Schlaufe" im Sinne der vorliegenden Erfindung bedeutet insbesondere, dass die Schlaufe freistehend ausgebildet ist und die Schlaufe nicht lediglich durch Ablaufen des Dichtungsstrangs auf einer versetzt angeordneten Rolle im Pufferbereich gebildet wird.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass die Dichtung mittels der Schlaufe vorgelagerten Fördermitteln gefördert wird und wobei die Schlaufe durch eine überhöhte Fördergeschwindigkeit der Fördermittel gebildet wird. Die zumindest einmalig überhöhte Fördergeschwindigkeit der Fördermittel sorgt dafür, dass es im Pufferbereich zu einem kontrollierten Stau im Dichtungsstrang kommt, wodurch sich dort im Dichtungsstrang eine freistehende Schlaufe ausbildet. Diese freistehende Schlaufe fungiert sodann als Materialpuffer bzw. Zwischenspeicher, so dass beim Applizieren stets nur so viel Dichtung nachgezogen wird, wie gerade benötigt wird. Schwankungen der Dichtungseigenschaften werden hierdurch ausgeglichen. Selbst geringe Schwankungen beim Materialbedarf während des Applizierens, beispielsweise aufgrund von sich verändernden Schlupfverhalten des Dichtungsstrangs, werden durch Veränderungen in der Größe der Schlaufe abgefangen. Es muss lediglich sichergestellt werden, dass die Schlaufe zu keinem Zeitpunkt verschwindet, die Schlaufengröße also auf null sinkt. Dies wird vorzugsweise dadurch sichergestellt, dass die Schlaufengröße durch Steuerung der Förderleistung der Fördermittel geregelt wird. Die Fördermittel umfassen vorzugsweise wenigstens eine Förderrolle und besonders bevorzugt zwei gegenüberliegende Förderrollen, zwischen welchen der Dichtungsstrang gefördert wird.

Gemäß einer weiteren bevorzugten Ausführungsform der vorliegenden Erfindung ist vorgesehen, dass die Schlaufengröße mittels eines Sensors überwacht wird. Durch die Überwachung der Schlaufengröße mittels des Sensors kann vorteilhafterweise sichergestellt werden, dass stets eine Schlaufe als Puffer vorgehalten wird. Denkbar ist, dass der Sensor einen optischen Sensor und/oder einen Abstandssensor umfasst. Denkbar wäre aber auch, dass der Sensor ein Abstandsmessgerät, beispielsweise basierend auf Laser- oder Ultraschallmessung, umfasst. Insbesondere werden die Fördermittel in Abhängigkeit von Messdaten des Sensors derart gesteuert, dass stets eine Schlaufe mit einer vorgegebenen Schlaufengröße vorgehalten wird. Denkbar ist, dass die Fördergeschwindigkeit des Fördermittels automatisch erhöht wird, wenn der Sensor eine abnehmende Schlaufengröße detektiert, beispielsweise beim Unterschreiten eines unteren Schwellwerts. Auf diese Weise wird die Schlaufengrößer wieder vergrößert und einem Verschwinden der Schlaufe vorgebeugt. Analog wird die Fördergeschwindigkeit des Fördermittels reduziert, wenn eine zunehmende Schlaufengröße, beispielsweise ein Überschreiten eines oberen Schwellwerts, detektiert wird. In vorteilhafter Weise ist diese automatische Steuerung vergleichsweise einfach und kostengünstig zu implementieren.
Gemäß einer weiteren bevorzugten Ausführungsform der vorliegenden Erfindung ist vorgesehen, dass die Schlaufe seitlich mittels Führungsplatten geführt wird. Die Schlaufe ist dabei zwischen den beiden Führungsplatten angeordnet, so dass ein seitliches Umkippen oder Abknicken der freistehenden Schlaufe verhindert wird. Erfindungsgemäß ist vorgesehen, dass die Dichtung ferner mittels der Schlaufe nachgelagerten Führungsrollen geführt wird, wobei die Führungsrollen entlang der Transportrichtung der Dichtung in Richtung Werkstück einen Freilauf aufweisen. Die Führungsrollen sind beim Applizieren vorzugsweise nicht angetrieben, so dass stets nur so viel Dichtmaterial aus dem Pufferbereich nachgezogen wird, wie auch tatsächlich zum Applizieren benötigt wird. Denkbar ist, dass die Führungsrollen seitlich auseinander zu bewegen sind, um den Applikationskopf vor dem Applizieren mit einer neuen Dichtung zu bestücken.
Ein weiterer Gegenstand der vorliegenden Erfindung ist eine Vorrichtung zum Applizieren einer Dichtung auf ein Werkstück, insbesondere auf ein Fahrzeugkarosserieteil, mit den Merkmalen des Anspruchs 7. Analog zum erfindungsgemäßen Verfahren ist mit der Vorrichtung ein stau- und spannungsfreies Applizieren der Dichtung auf das Werkstück möglich, da beim Applizieren durch die im Pufferbereich angeordnete Schlaufe stets lediglich so viel Dichtung nachgezogen wird, wie auch benötigt wird, ohne dass hierfür eine komplexe Steuerung der Fördermittel notwendig ist. Insbesondere können auf diese Weise auch die Eigenschaften der Dichtung, welche das Schlupfverhalten des Dichtungsstrangs beeinflussen, variieren, ohne dass es zu mechanischen Spannungen oder zu staubedingten Verwölbungen im applizierten Dichtungsmaterial kommt. Zudem ist die erfindungsgemäße Vorrichtung vergleichsweise einfach und kostengünstig herstellbar.
Gemäß einer bevorzugten Ausführungsform der vorliegenden Erfindung ist vorgesehen, dass die Vorrichtung dem Pufferbereich vorgelagerte Fördermittel aufweist, welche die Dichtung derart in den Pufferbereich fördern, dass sich die Schlaufe im Pufferbereich ausbildet, wobei die Fördermittel vorzugsweise wenigstens eine Förderrolle umfasst. In vorteilhafter Weise wird durch eine zumindest kurzzeitig überhöhte Fördergeschwindigkeit des Fördermittels die Schlaufe im Dichtungsstrang ausgebildet. Es bildet sich somit ein Puffer aus, ohne dass hierfür eine komplexe Steuerung oder kostenintensive zusätzliche Bauteile nötig sind.
Gemäß einer bevorzugten Ausführungsform der vorliegenden Erfindung ist vorgesehen, dass die Vorrichtung einen Sensor zur Messung der Schlaufengröße im Pufferbereich aufweist. Ferner weist die Vorrichtung insbesondere ein Steuermodul zur Steuerung der Fördermittel in Abhängigkeit von Messdaten des Sensors derart, dass stets eine Schlaufe mit einer vorgegebenen Schlaufengröße vorgehalten wird, auf. In vorteilhafter Weise wird mittels des Sensors und dem Steuermodul sichergestellt, dass stets eine Schlaufe mit einer Größe zwischen einer vorgegebenen Minimalgröße und einer vorgegebenen Maximalgröße vorgehalten werden kann.
Gemäß einer weiteren bevorzugten Ausführungsform der vorliegenden Erfindung ist vorgesehen, dass die Vorrichtung zwei im Pufferbereich angeordnete Führungsplatten aufweist, zwischen welche die Schlaufe geführt wird. Die Schlaufe wird insbesondere zwischen zwei Führungsplatten geführt, so dass ein seitliches Abkippen der freistehenden Schlaufe wirksam verhindert wird. Erfindungsgemäß ist vorgesehen, dass die Vorrichtung dem Pufferbereich nachgelagerter Führungsrollen zum Führen der Dichtung aufweist, wobei die Führungsrollen entlang der Transportrichtung der Dichtung in Richtung des Werkstücks einen Freilauf aufweisen. Die Führungsrollen sind zum Einfädeln der Dichtung insbesondere bewegbar ausgebildet.
Gemäß einer weiteren bevorzugten Ausführungsform der vorliegenden Erfindung ist vorgesehen, dass die Vorrichtung eine auf der applizierten Dichtung ablaufende Applikationsrolle zum Andrücken der Dichtung aufweist. Vorzugsweise weist die Vorrichtung ferner ein Mundstück mit einer Durchgangsöffnung auf, durch welche der Dichtungsstrang geführt wird, wobei das Mundstück entlang des Dichtungsstrangs zwischen den Führungsrollen und der Applikationsrolle angeordnet ist. Denkbar ist, dass in das Mundstück eine Trennvorrichtung zum Durchtrennen des Dichtungsstrangs integriert ist.
Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur** 1: zeigt eine schematische Ansicht einer Vorrichtung und eines Verfahrens gemäß einer beispielhaften Ausführungsform der vorliegenden Erfindung.
- **Figur** 2: zeigt eine schematische Detailansicht der Vorrichtung gemäß der beispielhaften Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

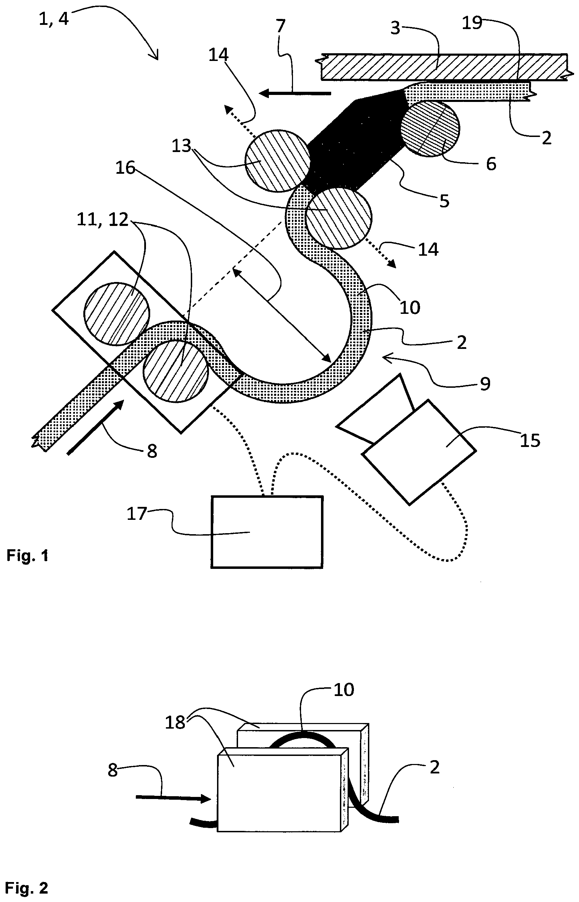

In **Figur 1** ist eine schematische Ansicht einer Vorrichtung 1 und eines Verfahrens zum Applizieren einer Dichtung 2 auf ein Werkstück 3 gemäß einer beispielhaften Ausführungsform der vorliegenden Erfindung.

Im vorliegenden Beispiel umfasst das Werkstück 3 beispielsweise ein Fahrzeugkarosserieteil, wie beispielsweise eine Fahrzeugtür, wobei die Dichtung 2 entlang eines Randbereiches des Fahrzeugkarosserieteils aufgebracht werden soll. Die Dichtung 2 umfasst insbesondere eine selbstklebende Endlosdichtung auf Gummi- bzw. Kautschukbasis.

Die Vorrichtung 1 umfasst einen Applikationskopf 4, welcher kontinuierlich relativ zum Werkstück 3 und insbesondere entlang des Randbereiches entlang einer Arbeitsrichtung 7 bewegt wird. Denkbar ist, dass der Applikationskopf 4 mittels eines Roboters bewegt wird. Die Vorrichtung 1 weist ein Mundstück 5 mit einer Durchgangsöffnung auf, durch welche die Dichtung 2 in Form eines Dichtungsstrangs kontinuierlich dem Werkstück 3 zugeführt wird. Der Dichtungsstrang wird dabei entlang einer Transportrichtung 8 in Richtung des Werkstücks 3 durch das Mundstück 5 transportiert. Werkstückseitig ist hinter dem Mundstück 5 eine Applikationsrolle 6 angeordnet, welche die aus dem Mundstück 5 austretende Dichtung 2 an das Werkstück 3 drückt. Die Applikationsrolle 6 läuft hierfür auf der applizierten Dichtung 2 ab, so dass die selbstklebende Dichtung 2 eine stoffschlüssige Klebeverbindung 19 mit dem Werkstück 3 eingeht. Das Mundstück 5 weist eine Trennvorrichtung (nicht dargestellt) zum Durchtrennen des Dichtungsstrangs, nachdem die gewünschte Menge an Dichtungsmaterial auf das Werkstück 3 appliziert wurde, auf.

Dem Mundstück 5 ist entgegen der Transportrichtung 8 ein Pufferbereich 9 vorgeschaltet. In diesem Pufferbereich 9 wird die Dichtung 2 in einer freien bzw. freistehenden Schlaufe 10 geführt. Die Vorrichtung 1 weist hierfür Fördermittel 11 in Form zweier angetriebener Förderrollen 12 auf, zwischen welchen die Dichtung 2 angeordnet ist und mittels welchen die Dichtung 2 entlang der Transportrichtung 8 gefördert wird. Hinter dem Pufferbereich 9 weist die Vorrichtung 1 zwei Führungsrollen 13 auf, welche während des Applikationsprozesses jedoch nicht angetrieben sind und somit keinen Beitrag zur Förderung der Dichtung 2 leisten. Die Führungsrollen 13 weisen während des Applikationsprozesses bezüglich der Transportrichtung 8 vielmehr einen Freilauf auf. Die Führungsrollen 13 werden nur beim Einfädeln einer neuen Dichtung 2 oder nachdem die Dichtung 2 im Mundstück 5 durch die Trennvorrichtung zertrennt wurde angetrieben, um den Dichtungsanfang der neu eingefädelten oder zertrennten Dichtung 2 im Bereich der Applikationsrolle 6 bereitzustellen. Zum Einfädeln einer neuen Dichtung 2 sind die Führungsrollen 13 optional entlang einer zur Transportrichtung 8 senkrechten Querrichtung 14 auseinander bewegbar.

Die Schlaufe 10 im Dichtungsstrang wird durch eine entsprechende Steuerung der Fördergeschwindigkeit der Förderrollen 12 gebildet. Denkbar ist beispielsweise, dass zeitlich vor dem Beginn des kontinuierlichen Appliziervorgangs die Dichtung 2 mittels der Förderrollen 12 kurzzeitig durch den Applikationskopf 4 gefördert wird, ohne dass der Applikationskopf 4 relativ zum Werkstück 2 bewegt wird. Zwischen den Förderrollen 12 und den Führungsrollen 13 tritt somit ein Dichtungsstau auf, wodurch die Dichtung 2 seitlich ausweicht und sich die Schlaufe 10 ausbildet. Anschließend wird der Applikationsvorgang gestartet und der Applikationskopf 4 wird relativ zum Werkstück 2 mit einer Arbeitsgeschwindigkeit bewegt, welche im Wesentlichen der Transportgeschwindigkeit der Dichtung 2 durch den Applikationskopf 4 entspricht. Die Schlaufe 10 im Dichtungsstrang bleibt somit erhalten.

Wenn sich die Schlaufe 10 im Dichtungsstrang einmal ausgebildet hat, braucht es keinen großen Kraftaufwand mehr innerhalb des Dichtungsstrangs, um die Schlaufe 10 zu vergrößern oder zu verringern. Mit anderen Worten: Schon eine äußerst geringer Staudruck innerhalb des Dichtungsstrangs bzw. eine geringfügige Verringerung der Zugspannung beim Applizieren führt zu einer Vergrößerung der Schlaufe 10, während eine geringe Erhöhung der Zugspannung zu einer Verkleinerung der Schlaufe 10 führt. Etwaige Schwankungen der Appliziergeschwindigkeit, welche beispielsweise durch sich verändernde Eigenschaften der Dichtung 2 entlang des Dichtungsstrangs und hierdurch hervorgerufene unterschiedliche Schlupfverhalten auftreten, werden automatisch durch eine wachsende oder sinkende Schlaufengröße kompensiert. Es wird dadurch verhindert, dass in der applizierten Dichtung 2 Stauungen bzw. mechanische Spannungen im Dichtungsmaterial auftreten. Die freie Schlaufe 10 fungiert demnach als Dichtungspuffer. Es wird erreicht, dass beim Applizieren tatsächlich nur so viel Dichtungsmaterial nachgezogen wird, wie auch benötigt wird. Die Schlaufe ist völlig freistehend ausgebildet und wird allein durch einen kurzzeitig auftretenden bzw. überhöhten Staudruck im Dichtungsstrang, hervorgerufen durch eine entsprechende Steuerung der vorgeschalteten Förderrollen 12, gebildet.

Die Vorrichtung 1 weist ferner einen Sensor 15 auf, welcher die Größe 16 der Schlaufe 10, insbesondere die Schlaufentiefe bzw. den Durchmesser der Schlaufe 10, misst. Mit Hilfe des Sensors 15 wird verhindert, dass die Schlaufe 10 zu groß oder zu klein wird, um die Pufferfunktion auszuüben. Die Vorrichtung 1 umfasst ferner ein Steuermodul 17, welches die Förderrollen 12 in Abhängigkeit der Messdaten des Sensors 15 steuert. Wenn eine unter einen unteren Schwellwert abnehmende Schlaufengröße detektiert wird, wird die Fördergeschwindigkeit erhöht, damit die Schlaufengröße wieder in einen vorgegebenen Sollbereich anwächst. Analog wird die Fördergeschwindigkeit verringert, damit die Schlaufengröße in den Sollbereich absinkt, wenn eine über einen oberen Schwellwert anwachsende Schlaufengröße detektiert wird. In einfacher und kostengünstiger Weise wird somit eine automatische und adaptive Steuerung der Förderrollen realisiert.

Der Sensor 15 umfasst vorzugsweise einen Abstandssensor. Denkbar wäre auch, dass der Sensor ein Abstandsmessgerät, beispielsweise basierend auf Laser- oder Ultraschallmessung, umfasst.

In **Figur** 2 ist eine schematische Detailansicht der Vorrichtung 1 gemäß der beispielhaften Ausführungsform der vorliegenden Erfindung dargestellt. Damit die freistehende Schlaufe 10 nicht seitlich abknickt oder umfällt, weist die Vorrichtung 1 zwei Führungsplatten 18 auf, zwischen welchen die Schlaufe 10 geführt ist. Die beiden Führungsplatten 18 stützen die Schlaufe 10 senkrecht zur Transportrichtung 8. In Figur 1 sind die Führungsplatten 18 lediglich aus Gründen der Übersichtlichkeit nicht dargestellt.

### Bezugszeichenliste

- 1: Vorrichtung
- 2: Dichtung
- 3: Werkstück
- 4: Applikationskopf
- 5: Mundstück
- 6: Applikationsrolle
- 7: Arbeitsrichtung
- 8: Transportrichtung
- 9: Pufferbereich
- 10: Freie Schlaufe
- 11: Fördermittel
- 12: Förderrollen
- 13: Führungsrollen
- 14: Querrichtung
- 15: Sensor
- 16: Schlaufengröße
- 17: Steuermodul
- 18: Führungsplatten
- 19: Klebeverbindung

## Patentansprüche

1. Verfahren zum Applizieren einer Dichtung (2) auf ein Werkstück (3), insbesondere auf ein Fahrzeugkarosserieteil, wobei die Dichtung (2) mittels eines Applikationskopfes (4) kontinuierlich an das Werkstück (2) herangeführt und an das Werkstück (2) angedrückt wird, während der Applikationskopf (4) und das Werkstück (2) relativ zueinander bewegt werden, **dadurch gekennzeichnet, dass** die Dichtung (2) beim Heranführen an das Werkstück (3) in einer als Dichtungspuffer fungierenden freien Schlaufe (10) und mittels der Schlaufe (10) nachgelagerten Führungsrollen (13) geführt wird, wobei die Führungsrollen (13) entlang der Transportrichtung (8) der Dichtung (2) in Richtung Werkstück (2) einen Freilauf aufweisen.

2. Verfahren nach Anspruch 1, wobei die Dichtung (2) mittels der Schlaufe (10) vorgelagerten Fördermitteln (11) gefördert wird und wobei die Schlaufe (10) durch eine zumindest kurzzeitig überhöhte Fördergeschwindigkeit der Fördermittel (11) gebildet wird.

3. Verfahren nach Anspruch 2, wobei die Schlaufengröße (16) durch Steuerung der Fördergeschwindigkeit der Fördermittel (11) geregelt wird, wobei die Fördermittel (11) vorzugsweise wenigstens eine Förderrolle (12) umfassen.

4. Verfahren nach einem der vorhergehenden Ansprüche, wobei die Schlaufengröße (16) mittels eines Sensors (15) überwacht wird.

5. Verfahren nach Anspruch 4, wobei die Fördermittel (11) in Abhängigkeit von Messdaten des Sensors (15) derart gesteuert werden, dass stets eine Schlaufe (10) mit einer vorgegebenen Schlaufengröße (16) vorgehalten wird.

6. Verfahren nach einem der vorhergehenden Ansprüche, wobei die Schlaufe (10) seitlich mittels Führungsplatten (18) geführt wird.

7. Vorrichtung (1) zum Applizieren einer Dichtung (2) auf ein Werkstück (3), insbesondere auf ein Fahrzeugkarosserieteil, wobei die Vorrichtung (1) einen Applikationskopf (4) zum kontinuierlichen Heranführen und Andrücken der Dichtung (2) an das Werkstück (3) aufweist und wobei die Vorrichtung (1) einen Antrieb zur Erzeugung einer Relativbewegung zwischen dem Applikationskopf (4) und dem Werkstück (3) aufweist, **dadurch gekennzeichnet, dass** die Vorrichtung (1) einen Pufferbereich (9) aufweist, in welchem die Dichtung (2) in einer als Dichtungspuffer fungierenden freien Schlaufe (10) geführt ist und zu dem nachgelagerte Führungsrollen (13) zum Führen der Dichtung (2) vorgesehen sind, wobei die Führungsrollen (13) entlang der Transportrichtung (8) der Dichtung (2) in Richtung des Werkstücks (3) einen Freilauf aufweisen.

8. Vorrichtung (1) nach Anspruch 7, wobei die Vorrichtung (1) dem Pufferbereich (9) vorgelagerte Fördermittel (11) aufweist, welche die Dichtung (2) derart in den Pufferbereich (9) fördern, dass sich die Schlaufe (10) im Pufferbereich (9) ausbildet, wobei die Fördermittel (11) vorzugsweise wenigstens eine Förderrolle (12) umfassen.

9. Vorrichtung (1) nach einem der Ansprüche 7 oder 8, wobei die Vorrichtung (1) einen Sensor (15) zur Messung der Schlaufengröße (16) im Pufferbereich (9) aufweist.

10. Vorrichtung (1) nach Anspruch 9, wobei die Vorrichtung (1) ein Steuermodul (17) zur Steuerung der Fördermittel (11) in Abhängigkeit von Messdaten des Sensors (15) derart, dass stets eine Schlaufe (10) mit einer vorgegebenen Schlaufengröße (16) vorgehalten wird, aufweist.

11. Vorrichtung (1) nach einem der Ansprüche 7 bis 10, wobei die Vorrichtung (1) zwei im Pufferbereich (9) angeordnete Führungsplatten (18) aufweist, zwischen welche die Schlaufe (10) geführt wird.

12. Vorrichtung (1) nach Anspruch 11, wobei die Führungsrollen (13) zum Einfädeln der Dichtung (2) entlang einer Querrichtung (14) bewegbar ausgebildet sind.

13. Vorrichtung (1) nach einem der Ansprüche 7 bis 12, wobei die Vorrichtung (1) eine auf der applizierten Dichtung (2) ablaufende Applikationsrolle (6) zum Andrücken der Dichtung (2) an das Werkstück (3) aufweist.

## Claims

1. Method for applying a seal (2) to a workpiece (3), in particular to a vehicle body part, wherein the seal (2) by means of an application head (4) is continuously guided toward the workpiece (2) and is pressed onto the workpiece (2), while the application head (4) and the workpiece (2) are moved relative to one another, **characterized in that** the seal (2), when being guided toward the workpiece (3), by means of guide rollers (13) is guided in a free loop (10) that functions as a seal buffer, said guide rollers being downstream of the loop (10), wherein the guide rollers (13) along the transportation direction (8) of the seal (2) have a free-wheeling motion in the direction of the workpiece (2).

2. Method according to Claim 1, wherein the seal (2) is conveyed by means of conveying means (11) that are disposed upstream of the loop (10), and wherein the loop (10) is formed by an at least temporarily exaggerated conveying speed of the conveying means (11).

3. Method according to Claim 2, wherein the loop size (16) is regulated by controlling the conveying speed of the conveying means (11), wherein the conveying means (11) preferably comprise at least one conveying roller (12).

4. Method according to one of the preceding claims, wherein the loop size (16) is monitored by means of a sensor (15).

5. Method according to Claim 4, wherein the conveying means (11) are controlled in such a manner so as to depend on measured data of the sensor (15) that a loop (10) of a pre-defined loop size (16) is kept available at all times.

6. Method according to one of the preceding claims, wherein the loop (10) is laterally guided by means of guide plates (18).

7. Device (1) for applying a seal (2) to a workpiece (3), in particular to a vehicle body part, wherein the device (1) has an application head (4) for continuously guiding and pressing the seal (2) to the workpiece (3), and wherein the device (1) has a drive for generating a relative movement between the application head (4) and the workpiece (3), **characterized in that** the device (1) has a buffer region (9) in which the seal (2) is guided in a free loop (10) that functions as a seal buffer, and to this guide rollers (13) that are disposed downstream are provided for guiding the seal (2), wherein the guide rollers (13) along the transportation direction (8) of the seal (2) have a free-wheeling motion in the direction of the workpiece (3).

8. Device (1) according to Claim 7, wherein the device (1) has conveying means (11) that are disposed upstream of the buffer region (9), said conveying means (11) conveying the seal (2) into the buffer region (9) in such a manner that the loop (10) is configured in the buffer region (9), wherein the guide means (11) preferably comprise at least one conveying roller (12).

9. Device (1) according to either of Claims 7 and 8, wherein the device (1) has a sensor (15) for measuring the loop size (16) in the buffer region (9) .

10. Device (1) according to Claim 9, wherein the device (1) has a control module (17) for controlling the conveying means (11) depending on measured data of the sensor (15) that a loop (10) of a pre-defined loop size (16) is kept available at all times.

11. Device (1) according to one of Claims 7 to 10, wherein the device (1) has two guide plates (18) that are disposed in the buffer region (9), the loop (10) being guided between said guide plates.

12. Device (1) according to Claim 11, wherein the guide rollers (13) for threading the seal (12) are configured so as to be movable along a transverse direction (14).

13. Device (1) according to one of claims 7 to 12, wherein the device (1) has an application roller (6), running on the applied seal (2), for pressing the seal (2) onto the workpiece (3).

## Revendications

1. Procédé d'application d'un joint d'étanchéité (2) sur une pièce (3), en particulier sur une partie de carrosserie d'automobile, le joint d'étanchéité (2) étant approché en continu de la pièce (2) au moyen d'une tête d'application (4) et pressé sur la pièce (2) tandis que la tête d'application (4) et la pièce (2) sont déplacées l'une par rapport à l'autre, **caractérisé en ce que**, lors du rapprochement vers la pièce (3), le joint d'étanchéité (2) est guidé dans une boucle (10) libre fonctionnant en tant que tampon de joint d'étanchéité et au moyen de galets de guidage (13) situés en aval de la boucle (10), les galets de guidage (13) présentant une roule libre le long de la direction de transport (8) du joint d'étanchéité (2) en direction de la pièce (2).

2. Procédé selon la revendication 1, le joint d'étanchéité (2) étant transporté au moyen de moyens de transport (11) situés en amont de la boucle (10), et la boucle (10) étant formée par une vitesse de transport des moyens de transport (11) accrue au moins brièvement.

3. Procédé selon la revendication 2, la grandeur de la boucle (16) étant réglée par la commande de la vitesse de transport des moyens de transport (11), les moyens de transport (11) comprenant de préférence au moins un rouleau de transport (12).

4. Procédé selon l'une des revendications précédentes, la grandeur de la boucle (16) étant surveillée au moyen d'un capteur (15).

5. Procédé selon la revendication 4, les moyens de transport (11) étant commandés en fonction de données de mesure du capteur (15) de telle sorte qu'une boucle (10) est maintenue constamment avec une grandeur de la boucle (16) prédéfinie.

6. Procédé selon l'une des revendications précédentes, la boucle (10) étant guidée latéralement au moyen de plaques de guidage (18).

7. Dispositif (1) destiné à l'application d'un joint d'étanchéité (2) sur une pièce (3), en particulier sur une partie de carrosserie d'automobile, le dispositif (1) présentant une tête d'application (4) pour le rapprochement et la pression en continu du joint d'étanchéité (2) sur la pièce (3), et le dispositif (1) présentant un entraînement pour la production d'un mouvement relatif entre la tête d'application (4) et la pièce (3), **caractérisé en ce que** le dispositif (1) présente une zone tampon (9) dans laquelle le joint d'étanchéité (2) est guidé dans une boucle (10) libre fonctionnant en tant que tampon de joint d'étanchéité et pour laquelle des galets de guidage (13) situés en aval sont prévus pour le guidage du joint d'étanchéité (2), les galets de guidage (13) présentant une roue libre le long de la direction de transport (8) du joint d'étanchéité (2) en direction de la pièce (3).

8. Dispositif (1) selon la revendication 7, le dispositif (1) présentant des moyens de transport (11) situés en amont de la zone tampon (9) qui transportent le joint d'étanchéité (2) dans la zone tampon (9) de telle sorte que la boucle (10) se constitue dans la zone tampon (9), les moyens de transport (11) comprenant de préférence au moins un rouleau de transport (12).

9. Dispositif (1) selon l'une des revendications 7 et 8, le dispositif (1) présentant un capteur (15) pour la mesure de la grandeur de la boucle (16) dans la zone tampon (9).

10. Dispositif (1) selon la revendication 9, le dispositif (1) présentant un module de commande (17) destiné à la commande des moyens de transport (11) en fonction de données de mesure du capteur (15) de telle sorte qu'une boucle (10) avec une grandeur de la boucle (16) prédéfinie est maintenue constamment.

11. Dispositif (1) selon l'une des revendications 7 à 10, le dispositif (1) présentant deux plaques de guidage (18) disposées dans la zone tampon (9) entre lesquelles la boucle (10) est conduite.

12. Dispositif (1) selon la revendication 11, les galets de guidage (13) étant constitués de façon mobile pour l'enfilage du joint d'étanchéité (2) le long d'une direction transversale (14).

13. Dispositif (1) selon l'une des revendications 7 à 12, le dispositif (1) présentant un rouleau d'application (6) roulant sur le joint d'étanchéité (2) appliqué pour presser le joint d'étanchéité (2) sur la pièce (3).
